# EUROPEAN PATENT SPECIFICATION

(11) **EP 3 765 298 B1**
(45) Date of publication and mention of the grant of the patent: **05.06.2024**
(21) Application number: 18769564.8
(22) Date of filing: 30.08.2018
(51) Int. Cl.: B41J 2/175, G03G 15/08, B29C 64/343

(54) **SYRINGES WITH PLUNGERS**
SPRITZEN MIT KOLBEN
SERINGUES AVEC PISTONS

(43) Date of publication of application: 20.01.2021
(73) Proprietor: Hewlett-Packard Development Company, L.P., Spring TX 77389 (US)
(72) Inventor: SMITH, Kenneth K., Boise, Idaho 83714-0021 (US); STOREY, Matthew James, Austin, Texas 78756 (US); HICKMAN, Zackary Thomas, Austin, Texas 78756 (US); TRAN, An, Austin, Texas 78756 (US); NADEAU, Bennett Alexander, Austin, Texas 78756 (US)
(74) Representative: Hoffmann Eitle
(86) International application number: PCT/US2018/048704
(87) International publication number: WO 2020/046307

(56) References cited:
- WO-A2-2018/125887
- JP-A- S6 098 468
- US-A- 5 273 187
- US-A1- 2005 156 981
- US-A1- 2011 196 312
- US-A1- 2012 200 646

## Description

### Background

Imaging systems, such as printers, copiers, etc., may be used to form markings on a physical medium, such as text, images, etc. in some examples, imaging systems may form markings on the physical medium by performing a print job. A print job can include forming markings such as text and/or images by transferring print material particles to the physical medium. US5273187, US2011/196312, WO2018/125887, US2012/200646 and US2005/156981 relate to dispensers and refill methods.

### Brief Description of the Drawings

Figure 1 illustrates an exploded view of an example of a print material particles container consistent with the disclosure.
Figure 2 illustrates a partial view of an example of an apparatus consistent with the disclosure.
Figure 3 illustrates a partial view of an example of an apparatus consistent with the disclosure.
Figure 4 illustrates an example of a portion of an apparatus including an outer syringe body consistent with the disclosure.
Figure 5 illustrates an example of a print material particles container in a first position and a second position consistent with the disclosure.
Figure 6 illustrates an exploded view of an example of a print material particles container consistent with the disclosure.
Figure 7 illustrates an exploded view of an example of a print material particles container including a sensor consistent with the disclosure.
Figure 8 illustrates a cutaway view of an example of a print material particles container consistent with the disclosure.
Figure 9 is a block diagram of an example of a print material particles container consistent with the disclosure.
Figure 10 is a block diagram of an example of a print material particles container consistent with the disclosure.

### Detailed Description

Imaging devices may include a supply of a print material particles located in a reservoir. As used herein, the term "print material particles" refers to a substance which, when applied to a medium, can form representation(s) on the medium during a print job. In some examples, the print material particles can be deposited in successive layers to create three-dimensional (3D) objects. For example, print material particles can include a powdered semi-crystalline thermoplastic material, a powdered metal material, a powdered plastic material, a powdered composite material, a powdered ceramic material, a powdered glass material, a powdered resin material, and/or a powdered polymer material, among other types of powdered or particulate material. The print material particles can be particles with an average diameter of less than one hundred microns. For example, the print material particles can be particles with an average diameter of between 0-100 microns. However, examples of the disclosure are not so limited. For example, print material particles can be particles with an average diameter of between 20-50 microns, 5-10 microns, or any other range between 0-100 microns. The print material particles can be fused when deposited to create 3D objects.

The print material particles can be deposited onto a physical medium. As used herein, the term "imaging device" refers to any hardware device with functionalities to physically produce representation(s) on the medium. In some examples, the imaging device can be a 3D printer. For example, the 3D printer can create a representation (e.g., a 3D object) by depositing print material particles in successive layers to create the 3D object.

The reservoir including the print material particles may be inside of the imaging device and include a supply of the print material particles such that the imaging device may draw the print material particles from the reservoir as the imaging device creates the images on the print medium. As used herein, the term "reservoir" refers to a container, a tank, and/or a similar vessel to store a supply of the print material particles for use by the imaging device.

As the imaging device draws the print material particles from the reservoir, the amount of print material particles in the reservoir may deplete. As a result, the amount of print material particles in the reservoir of the imaging device may have to be replenished.

A print material particles container may be utilized to fill and/or refill the reservoir of the imaging device with print material particles. During a fill and/or refill operation, the print material particles container can transfer print material particles from the print material particles container to the reservoir of the imaging device.

Determining whether a fill/refill operation has been completed can have an effect on the performance of the imaging device. For example, determining if a fill/refill operation has been completed can provide accurate print material particle levels, reducing the risk of overfill or running out of print material particles, since overfill can jam and/or damage the imaging device as overfilling of print material particles can prevent mechanisms from functioning, and running out of print material particles can cause damage to the imaging device and/or faster wear.

Accordingly, syringes with plungers can allow for a determination of completion of a fill/refill operation. For example, when a plunger of a syringe is moved from a first position to a second position a determination can be made that the fill/refill operation is completed when the syringe arrives at the second position. The imaging device can continue to perform print jobs as a result.

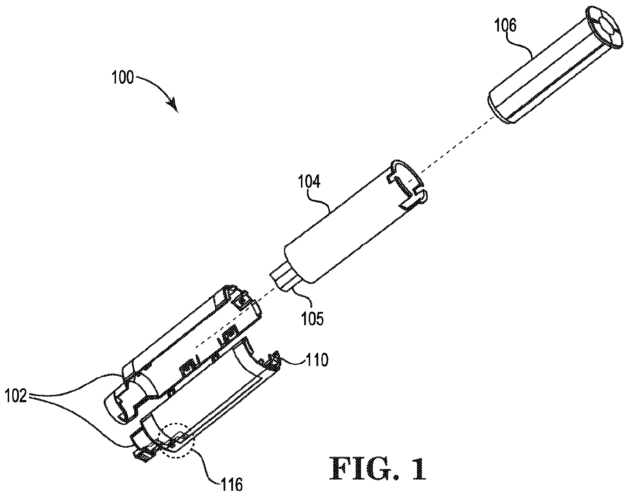

Figure 1 illustrates an exploded view of an example of a print material particles container 100 consistent with the disclosure. Print material particles container 100 can include outer syringe body 102, inner syringe body 104, print material output 105, and plunger 106. Outer syringe body 102 includes pushrod 110 and normally open switch 116.

As illustrated in Figure 1, print material particles container 100 can include inner syringe body 102. As used herein, the term "inner syringe body" refers to an inner structure of a syringe. As used herein, the term "syringe" refers to a reciprocating pump including a plunger and a tube, where the plunger can be linearly moved to allow the syringe to take in and/or expel liquid or gas through an orifice at the end of the tube. Inner syringe body 104 can be a print material reservoir. For example, the print material reservoir can store a supply of print material particles. The print material reservoir can supply/resupply an imaging device (e.g., a host print system), as is further described herein.

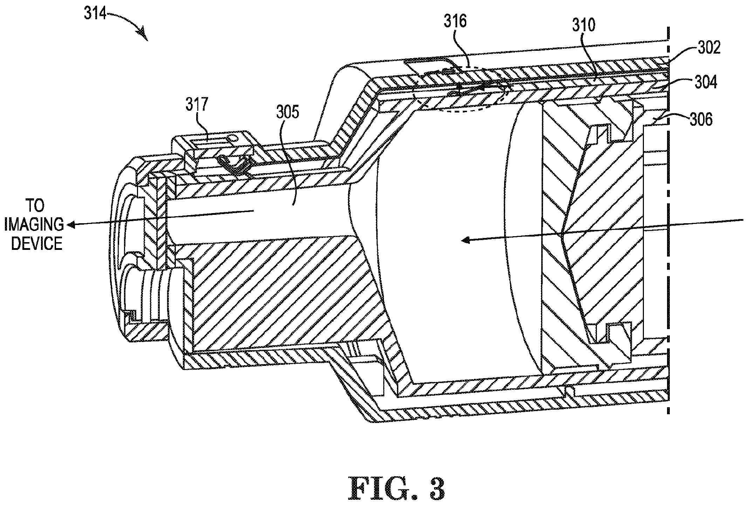

Print material particles container 100 includes plunger 106. As used herein, the term "plunger" refers to a piston to take in and/or expel liquid or gas through an orifice at the end of inner syringe body 104. For example, the inner syringe body 104 can be a tube that can include a print material particles, and plunger 106 can take in and/or expel the print material particles, as is further described in connection with Figure 3. Plunger 106 can be a structure to adapt a volume of the print material reservoir (e.g., inner syringe body 104). For example, plunger 106 can increase or decrease a volume of inner syringe body 104 based on movement of plunger 106 in inner syringe body 104.

Inner syringe body 104 can include print material output 105. As used herein, the term "print material output" refers to an opening through which material can be moved. For example, print material output 105 can be an opening through which print material particles can be moved in response to plunger 106 decreasing the volume of inner syringe body 104 based on movement of plunger 106 in inner syringe body 104.

Although not illustrated in Figure 1 for clarity and so as not to obscure examples of the disclosure, plunger 106 includes a tab. As used herein, the term "tab" refers to a projection of material. For example, plunger 106 can include a small projection of material to engage pushrod 110, as is further described herein.

Although not illustrated in Figure 1 for clarity and so as not to obscure examples of the disclosure, plunger 106 can be located in inner syringe body 104. For example, plunger 106 can be coaxially located in inner syringe body 104 to allow plunger 106 to take in print material particles to and/or expel print material particles from inner syringe body 104.

Print material particles container 100 includes outer syringe body 102. As used herein, the term "outer syringe body" refers to an outer structure of a syringe. For example, outer syringe body 102 can be an outer structure of print material particles container 100 and can include inner syringe body 104 and plunger 106. The outer syringe body 102 can be a print material container. For example, as illustrated in Figure 1, inner syringe body 104, plunger 106, pushrod 110, and normally open switch 116 can be located in outer syringe body 102 (e.g., the print material container), among other components.

Outer syringe body 102 includes normally open switch 116. As used herein, the term "switch" refers to an electrical device that enables or disables a flow of electrical current in an electrical circuit. For example, a switch can enable a flow of electrical current, allowing electrical current to flow in the electrical circuit. A switch that has enabled the flow of electrical current is a closed switch. As another example, a switch can disable a flow of electrical current, preventing electrical current from flowing in the electrical circuit. A switch that has disabled the flow of electrical current is an open switch. As used herein, the term "normally open switch" refers to a switch that is in an open state unless the switch is acted upon. For example, normally open switch 116 is in an open state (e.g., preventing electrical current from flowing in the electrical circuit connected to normally open switch 116) until normally open switch 116 is acted upon by pushrod 110, as is further described herein. Normally open switch 116 can be a switch structure. For example, as described above, the switch structure can be normally deactivated (e.g., in an open state). The switch structure can be activated by movement of the volume adapting structure (e.g., the plunger 106). The switch structure can be at least partially located at a side of outer syringe body 102 (e.g., the print material container).

Outer syringe body 102 includes pushrod 110. As used herein, the term "pushrod" refers to a slender piece of material that is acted upon by a tab to close a switch. The pushrod 110 is acted on by the tab (e.g., not illustrated in Figure 1) of plunger 106 when plunger 106 is moved from a first position to a second position, as is further described herein.

As illustrated in Figure 1, pushrod 110 and normally open switch 116 can be located between outer syringe body 102 and inner syringe body 104. In other words, pushrod 110 and normally open switch 116 can be located on an inner surface of outer syringe body 102.

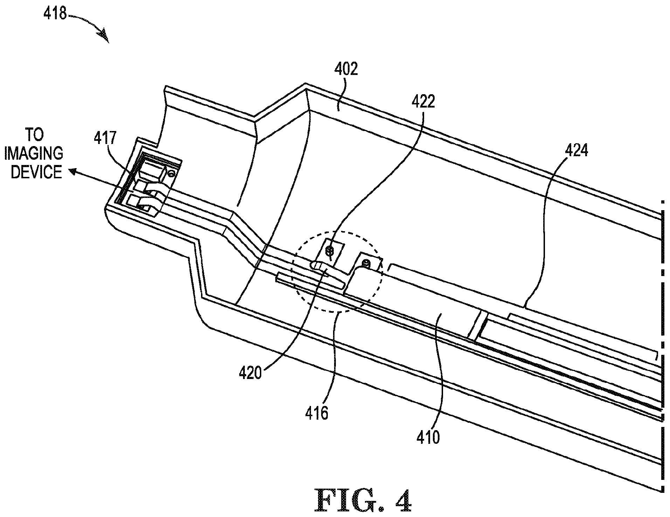

Plunger 106 is adapted to be in contact with pushrod 110 when plunger 106 is moved from a first position to a second position. For example, inner syringe body 104 can include print material particles and plunger 106 can be in a first position such that, as plunger 106 moves from the first position to the second position (e.g., plunger 106 is pushed and moves linearly into inner syringe body 104), print material particles is expelled from inner syringe body 104. As plunger 106 is moved from the first position to the second position, the tab of plunger 106 can come in contact with pushrod 110, pushing pushrod 110 in a same direction as plunger 106, and causing pushrod 110 to close normally open switch 116, as is further described in connection with Figures 3 and 4.

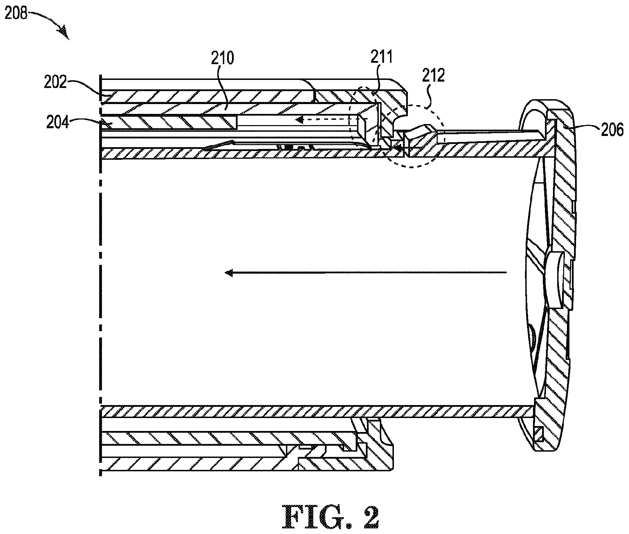

Figure 2 illustrates a partial view of an example of an apparatus 208 consistent with the disclosure. Apparatus 208 can include outer syringe body 202, inner syringe body 204, and plunger 206. Outer syringe body 202 can include pushrod 210. Plunger 206 can include tab 212.

As illustrated in Figure 2, plunger 206 can be located within inner syringe body 204. Plunger 206 (e.g., the volume adapting structure) can include tab 212.

Plunger 206 can move from a first position to a second position in the direction illustrated in Figure 2 (e.g., in a direction to the "left", as oriented in Figure 2). As plunger 206 moves from the first position to the second position, tab 212 of plunger 206 contacts protrusion 211 of pushrod 210 to engage pushrod 210. As used herein, the term "protrusion" refers to a projection of material. For example, pushrod 210 can include a small projection of material that makes contact with tab 212 when plunger 206 moves from the first position to a second position.

As a result of tab 212 contacting protrusion 211 of pushrod 210, pushrod 210 can be correspondingly moved in a direction that is the same as the direction of plunger 206 (e.g., in a direction to the "left", as oriented in Figure 2). Pushrod 210 can close the normally open switch (e.g., not illustrated in the partial view shown in Figure 2) when plunger 206 is moved from the first position to the second position, as is further described in connection with Figures 3 and 4. Pushrod 210 can close a normally open switch (e.g., activate the switch structure), as is further described in connection with Figures 3 and 4.

Figure 3 illustrates a partial view of an example of an apparatus 314 consistent with the disclosure. The apparatus 314 can include outer syringe body 302, inner syringe body 304, and plunger 306. Outer syringe body 302 can include pushrod 310, normally open switch 316, and electrical interface 317. Inner syringe body 304 can include print material output 305.

As previously described in connection with Figure 1, normally open switch 316 can be a switch structure. The switch structure can be normally deactivated (e.g., normally open in an open state such that no current flows through the circuit connecting normally open switch 316 to electrical interface 317). Electrical interface 317 can be located near print material output 305 to interface with the imaging device (e.g., the host print system), as is further described in connection with Figure 4.

Normally open switch 316 can include a contact lead and an opposite contact lead, as further described and illustrated in Figure 4. As used herein, the term "lead" refers to an electrical connection to connect two locations electrically. For example, the contact lead and opposite contact lead can be electrical connections that act as a switch to connect with each other to close an electrical circuit. The contact leads can be leads of the switch structure at the print material level (e.g., on the apparatus 314).

As normally open switch 316 is in an open state until pushrod 310 acts on it (e.g., plunger 306 is in the first position), a gap exists between the contact lead and the opposite contact lead. As used herein, the term "gap" refers to an empty space between objects. For example, the space between the contact lead and the opposite contact lead is empty while normally open switch 316 is in an open state (e.g., there is nothing connecting the contact lead and the opposite contact lead in the open state of normally open switch 316).

As previously described in connection with Figure 1, inner syringe body 304 can include print material particles. As the imaging device performs print jobs, print material particles in the imaging device can deplete. Therefore, during a fill and/or refill operation, print material particles may be supplied to the imaging device so that the imaging device can continue to perform print jobs. For example, apparatus 314 can be connected to the imaging device such that, during a fill and/or refill operation, plunger 306 can be moved from the first position to the second position to expel print material particles from inner syringe body 304 to the imaging device. The print material particles can fill/refill the imaging device such that the imaging device can continue to perform print jobs.

As plunger 306 (e.g., the volume adapting structure) is moved in inner syringe body 304 (e.g., the print material reservoir), the volume of inner syringe body 304 can decrease. As a result of the decrease in volume of inner syringe body 304, print material particles can be moved through print material output 305.

As plunger 306 is moved from the first position to the second position, the tab (e.g., not illustrated in the partial view shown in Figure 3) of plunger 306 can contact pushrod 310 to cause pushrod 310 to close normally open switch 316. For example, normally open switch 316 (e.g., the switch structure) can be deactivated (e.g., in an open state) when the volume of inner syringe body 304 includes an amount of print material particles. The amount of print material particles can correspond to the print material reservoir (e.g., the inner syringe body 304) being at least partially filled with print material particles. The print material particles can be supplied to an imaging device by the movement of plunger 306.

Pushrod 310 can be moved in a direction that is the same as the direction of movement of plunger 306 (e.g., in a direction to the "left", as oriented in Figure 3) as a result of the plunger 306 being moved. As a result of the movement of pushrod 310, pushrod 310 can contact the contact lead of normally open switch 316, causing the contact lead to come into contact with the opposite contact lead (e.g., causing the contact lead to be moved in a direction "upwards", as oriented in Figure 3) when plunger 306 reaches the second position. As a result of the contact lead contacting the opposite contact lead, normally open switch 316 can be in a closed state, allowing electrical current to flow in the electrical circuit connected to normally open switch 316, as is further described in connection with Figure 4. In other words, normally open switch 316 can be activated as a result of the volume of inner syringe body 304 being decreased from the initial amount of print material particles by the plunger 306 being moved in the inner syringe body. Normally open switch 316 can be closed (e.g., the switch structure activated) in response to plunger 306 (e.g., the volume adapting structure) decreasing the volume of inner syringe body 304 (e.g., the print material reservoir) by a threshold amount. The threshold amount can correspond to the amount of distance plunger 306 can travel to cause the tab of plunger 306 to engage pushrod 310 to cause pushrod 310 to close normally open switch 316.

When normally open switch 316 is in the closed state, the amount of print material particles in the volume of the print material reservoir (e.g., inner syringe body 304) can correspond to a substantially depleted condition. In other words, substantially all of the print material particles can have been moved through print material output 305 from inner syringe body 304.

Figure 4 illustrates an example of a portion of an apparatus 418 including an outer syringe body 402 consistent with the disclosure. Apparatus 418 can include outer syringe body 402. Outer syringe body 402 can include pushrod 410, normally open switch 416, electrical interface 417, and channel 424. Normally open switch 416 can include contact lead 420 and opposite contact lead 422.

Outer syringe body 402 can include channel 424. As used herein, the term "channel" refers to a groove in which pushrod 410 is located. For example, pushrod 410 can be located in channel 424. Pushrod 410 can move in channel 424 in response to the tab of the plunger (e.g., not illustrated in Figure 4) contacting pushrod 410 when the plunger is moved from the first position to the second position.

As the plunger is moved from the first position to the second position causing pushrod 410 to move, pushrod 410 can cause contact lead 420 to contact opposite contact lead 422. For example, as pushrod 410 is moved by the plunger, pushrod 410 can come into contact with contact lead 420. As a result of pushrod 410 coming into contact with contact lead 420, pushrod 410 can push contact lead 420 in a direction "downwards" (e.g., as oriented in Figure 4) to come into contact with opposite contact lead 422. In other words, the pushrod 410 can close contact lead 420 and opposite contact lead 422 to activate the switch structure (e.g., close normally open switch 416.

As a result of contact lead 420 contacting opposite contact lead 420, normally open switch 416 can be in a closed state. As a result of normally open switch 416 being closed, a circuit is completed.

As illustrated in Figure 4, the circuit can transmit a signal to the imaging device in response to the circuit being completed by normally open switch 416 being closed. The signal can be transmitted to the imaging device via electrical interface 417. As used herein, the term "electrical interface" refers to a device that enables communication between two electrical devices. For example, electrical interface 417 can enable communication between apparatus 418 and the imaging device (e.g., the host print system). Although not illustrated in Figure 4 for clarity and so as not to obscure examples of the disclosure, the circuit connecting normally open switch 416 and electrical interface 417 can include a memory. The memory can store data including print material characteristics and print material level related data corresponding to the print material particles included in the inner syringe body (e.g., the print material reservoir, not shown in Figure 4).

For example, apparatus 418 can be connected to the imaging device during a fill and/or refill operation. When the plunger is moved from the first position to the second position, print material particles can be supplied to the imaging device. When the plunger is at the second position, the print material particles has been expelled from the inner syringe body of apparatus 418 (e.g., not illustrated in Figure 4), and normally open switch 416 can be closed as a result of the plunger being at the second position.

When the print material particles has been expelled from the inner syringe body of apparatus 418, the signal can be transmitted to the imaging device in response to the circuit being completed when normally open switch 416 is closed. The signal can be transmitted to the imaging device (e.g., the host print system) via the electrical interface 417 in response to the switch structure being activated, where the signal can include the print material characteristics and print material level related data. The signal can be transmitted to the imaging device so that the imaging device can determine the fill and/or refill operation is complete so that the imaging device can continue to perform print jobs.

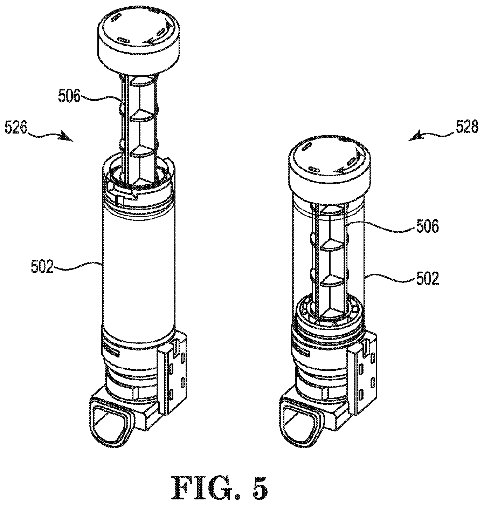

Figure 5 illustrates an example of a print material particles container in a first position 526 and a second position 528 consistent with the disclosure. As previously described in connection with Figures 1-4, the print material particles container can include an outer syringe body 502 and a plunger 506.

The print material particles container can be in a first position 526. For example, in first position 526, plunger 506 of print material particles container 526 is not depressed into the inner syringe body (e.g., not illustrated in Figure 5). Accordingly, the inner syringe body can include print material particles to supply to an imaging device.

Although not illustrated in Figure 5 for clarity and so as not to obscure examples of the disclosure, the print material particles container can be connected to an imaging device. For example, the print material particles container can be connected to an imaging device so that print material particles may be supplied to the imaging device so that the imaging device can perform print jobs. Plunger 506 can be depressed to expel print material particles from the print material particles container to the imaging device, as is further described herein.

Plunger 506 can be depressed as illustrated in Figure 5. For example, plunger 506 can be depressed from first position 526 to second position 528. As a result of the plunger 506 being depressed to second position 528, print material particles can be expelled from the print material particles container. For example, the print material particles container be connected to the imaging device such that, during a fill and/or refill operation, plunger 506 can be moved from the first position to the second position to expel print material particles from the inner syringe body to the imaging device. The print material particles can fill/refill the imaging device such that the imaging device can continue to perform print jobs.

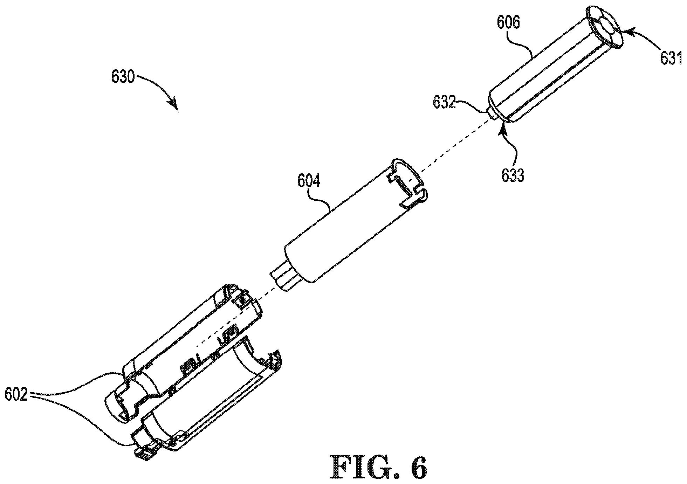

Figure 6 illustrates an exploded view of an example of a print material particles container 630 consistent with the disclosure. Print material particles container 630 can include print materials particles container 634, print material reservoir 635, and volume adapting structure 637. Volume adapting structure 637 can include metallic element 632.

Print material particles container 630 can be an outer syringe body (e.g., outer syringe body 102, 202, 302, 402, 502, previously described in connection with Figures 1-5, respectively). Print material reservoir 635 can be an inner syringe body (e.g., inner syringe body 104, 204, 304, previously described in connection with Figures 1-3, respectively). Volume adapting structure 637 can be plunger 106, 206, 306, 506, previously described in connection with Figures 1-3 and 5, respectively).

As illustrated in Figure 6, print material particles container 630 can include volume adapting structure 637. Although not illustrated in Figure 6 for clarity and so as not to obscure examples of the disclosure, volume adapting structure 637 can be located in print material reservoir 635. For example, volume adapting structure 637 can be coaxially located in print material reservoir 635 to allow volume adapting structure 637 to take in print material particles to and/or expel print material particles from print material reservoir 635.

Volume adapting structure 637 can include metallic element 632. As used herein, the term "metallic element" refers to a material or object is related to or resembles metal. In some examples, metallic element can be a magnet. As used here, the term "magnet" refers to a material or object that produces a magnetic field. For example, metallic element 632 can produce a magnetic field. In some examples, metallic element 632 can be an inductive element. As used herein, the term "inductive element" refers to a material or object that produces a magnetic field when electrical current flows through it.

Volume adapting structure 637 can include a top portion 631 and a bottom portion 633. As used herein, the term "top" refers to an uppermost portion of volume adapting structure 637. As used herein, the term "bottom" refers to a lowest portion of volume adapting structure 637. The top portion 631 can be a portion of volume adapting structure 637 that a user presses (e.g., exerts a force on) to move volume adapting structure 637 from the first position to the second position. The bottom portion 633 can be a portion located in print material reservoir 635 that causes print material particles to be expelled from print material particles container 630.

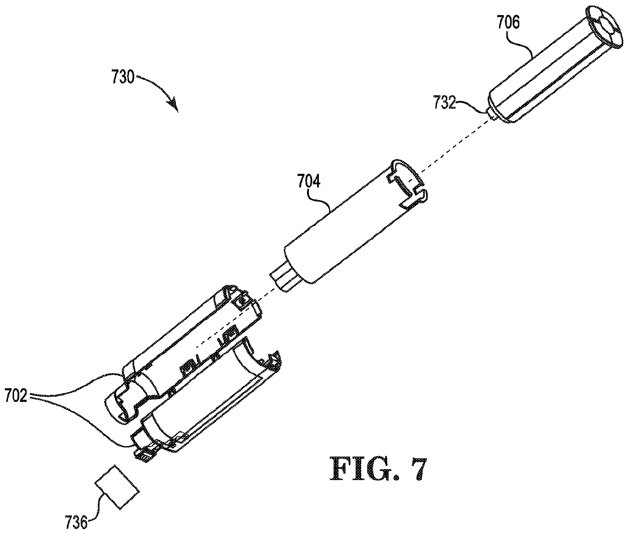

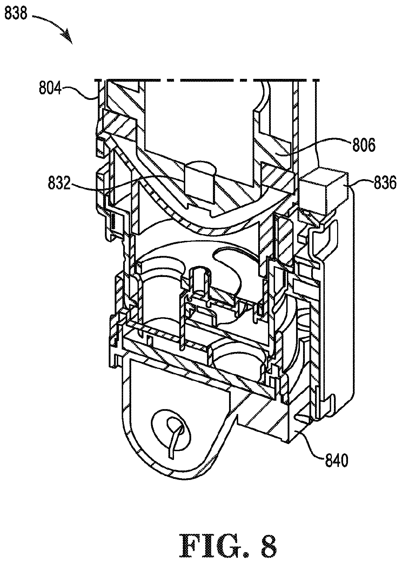

Metallic element 632 can be located in bottom portion 633 of volume adapting structure 637. For example, when volume adapting structure 637 is moved from the first position to the second position, metallic element 632 is in proximity with a sensor, as is further described in connection with Figures 7 and 8. As used herein, the term "sensor" refers to a device that detects an event or change in its environment and generates a corresponding signal as a result of the detected event or change.

Although metallic element 632is described above as being located in bottom portion 633 of volume adapting structure 637, examples of the disclosure are not so limited. For example, metallic element 632 can be located in any other portion of volume adapting structure 637.

Figure 7 illustrates an exploded view of an example of a print material particles container 730 including a sensor 736 consistent with the disclosure. Print material particles container 730 can include sensor 736, print materials particles container 734, print material reservoir 735, and volume adapting structure 737. Volume adapting structure 737 can include metallic element 732.

As illustrated in Figure 7, print material particles container 730 can include volume adapting structure 737 which can be located in print material reservoir 735 (e.g., not illustrated in Figure 7). Volume adapting structure 737 can include metallic element 732.

In some examples, sensor 736 can be a Hall-Effect sensor. As used herein, the term "Hall-Effect sensor" refers to a device such as a transducer that varies its output voltage in response to a magnetic field. For example, sensor 736 can be a sensor that, in response to the detection of the magnetic field of metallic element 732, varies its output voltage as metallic element 732 gets in proximity with sensor 736. For instance, when volume adapting structure 737 is moved from the first position to the second position, metallic element 732 can begin to get closer to sensor 736. As metallic element 732 gets closer to sensor 736, the output voltage of sensor 736 can vary, as is further described in connection with Figure 8.

In some examples, sensor 736 can be an analog Hall-Effect sensor. In some examples, sensor 736 can be a digital Hall-Effect sensor. For instance, the digital Hall-Effect sensor can include a digital interface such as an inter-integrated circuit (I2C) interface or an Serial Peripheral Interface (SPI), among other types of digital interfaces.

In some examples, sensor 736 can be an inductive sensor. As used herein, the term "inductive sensor" refers to a device that varies a magnetic field in response to a metallic object being in proximity with the inductive sensor. For example, sensor 736 can be a sensor that, in response to the detection of the metallic element 732, a magnetic field of the sensor 736 varies, as is further described in connection with Figure 8.

Figure 8 illustrates a cutaway view of an example of a print material particles container 838 consistent with the disclosure. Print material particles container 838 can include outer syringe body (e.g., not shown in Figure 8), print material reservoir 835, and volume adapting structure 837. Volume adapting structure 837 can include metallic element 832.

Print material particles container 838 can include volume adapting structure 837 which can be located in print material reservoir 835. Volume adapting structure 837 can include metallic element 832. Although not illustrated in Figure 8 for clarity and so as not to obscure examples of the disclosure, print material reservoir 835 can include print material particles.

As previously described in connection with Figure 6, metallic element 832 can be located on the bottom portion of volume adapting structure 837. In some examples, metallic element 832 can be located on the bottom portion of volume adapting structure 837 coaxially with a central axis of plunger 832. However, examples of the disclosure are not so limited. For example, metallic element 832 can be located off axis of the axis of plunger 804. For example, metallic element 832 can be located to the left, right, or any other location from the location illustrated in Figure 8.

As previously described in connection with Figure 5, volume adapting structure 837 can be moved from the first position to the second position. For example, volume adapting structure 837 can be depressed such that print material particles can be expelled from the print material particles container 838, as is further described herein.

As illustrated in Figure 8, volume adapting structure 837 can be at the second position. In other words, a user may have pushed volume adapting structure 837 from the first position to the second position in order to expel print material particles from print material particles container 838.

As a result of volume adapting structure 837 being moved from the first position to the second position, metallic element 832 can be in proximity with sensor 836. That is, the metallic element 832 can be moved closer to an output interface of print material reservoir 835 as volume adapting structure 837 is moved from the first position to the second position. As used herein, the term "output interface" refers to an interface to interact with an interface of an imaging device such that print material particles can be transferred to the imaging device via the output interface and the imaging device interface.

As illustrated in Figure 8, sensor 836 is located on an outer syringe body of print material particles container 838. However, examples of the disclosure are not so limited. For example, sensor 836 can be located on imaging device 840.

In some examples, sensor 836 can be a Hall-Effect sensor. As a result of volume adapting structure 837 being moved from the first position to the second position, metallic element 832 can move closer to sensor 836. As a result of metallic element 832 being moved closer to Hall-Effect sensor 836, an output voltage of sensor 836 can vary. In some examples, metallic element 832 can be a magnet. As volume adapting structure 837 is moved from the first position to the second position, the magnet moves closer to sensor 836, causing the output voltage of sensor 836 to increase.

In some examples, sensor 836 can be an inductive sensor. As a result of volume adapting structure 837 being moved from the first position to the second position, metallic element 832 can move closer to inductive sensor 836. As a result of metallic element 832 being moved closer to inductive sensor 836, an output voltage of inductive sensor 836 can vary based on the magnetic field of inductive sensor 836 varying in response to metallic element 832 being in proximity with inductive sensor 836.

Sensor 836 can detect volume adapting structure 837 being in the second position in response to the output voltage of sensor 836 exceeding a threshold voltage. For example, the output voltage of sensor 836 when volume adapting structure 837 is at the first position can be 0.2 volts (V), and as the volume adapting structure 837 is moved closer to the second position, the output voltage of sensor 836 can increase from 0.2V. When the output voltage of sensor 836 exceeds the threshold voltage (e.g., 1V), volume adapting structure 837 can be at the second position. For example, when volume adapting structure 837 is at the second position, the output voltage of sensor 836 can be 1.2V.

In response to the output voltage of sensor 836 exceeding the threshold voltage, a signal can be transmitted to imaging device 840. For example, print material particles container 838 can be connected to imaging device 840 during a fill and/or refill operation. When volume adapting structure 837 is moved from the first position to the second position, print material particles can be supplied to imaging device 840. When the plunger is at the second position, the print material particles has been expelled from the print material reservoir 835 of print material particles container 838.

When the print material particles has been expelled from the print material reservoir 835 of print material particles container 838, the signal can be transmitted to imaging device 840 in response to the output voltage of sensor 836 exceeding the threshold voltage. The signal can be transmitted to imaging device 840 so that the imaging device 840 can determine the fill and/or refill operation is complete so that the imaging device 840 can continue to perform print jobs.

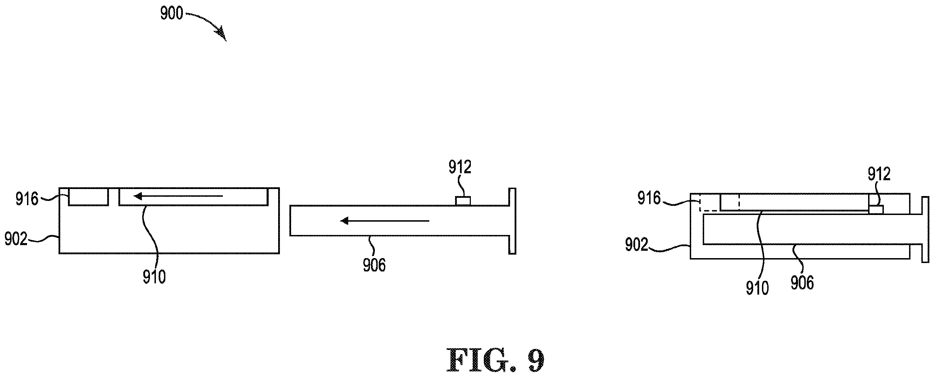

Figure 9 is a block diagram of an example of a print material particles container consistent with the disclosure. As illustrated in Figure 9, the print material particles container 900 is illustrated in a first position (e.g., shown on the left) and in a second position (e.g., shown on the right).

Print material particles container 900 can include an outer syringe body 902, normally open switch 916, and pushrod 910. Plunger 906 can include tab 912. In the first position, plunger 906 has not been pushed into outer syringe body 902.

Plunger 906 can be pushed into outer syringe body 902 such that plunger 906 is moved from the first position (e.g., shown on the right) to the second position (e.g., shown on the left). As plunger 906 is pushed into outer syringe body 902, tab 912 of plunger 906 contacts pushrod 910 such that pushrod 910 closes normally open switch 916.

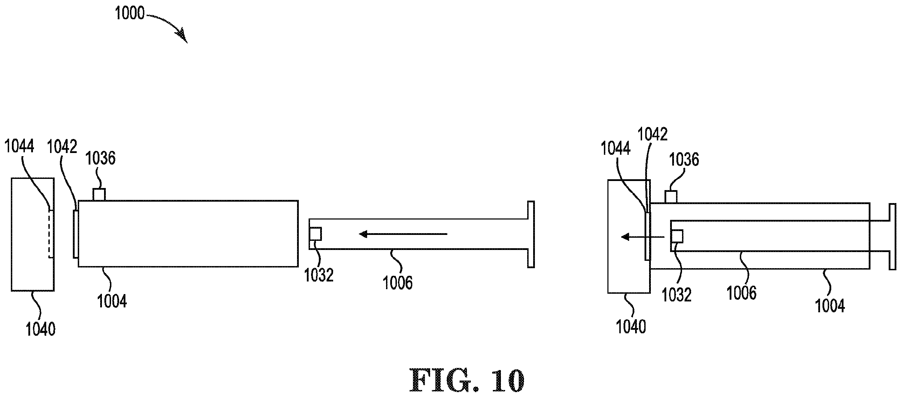

Figure 10 is a block diagram of an example of a print material particles container consistent with the disclosure. As illustrated in Figure 10, the print material particles container 1000 is illustrated in a first position (e.g., shown on the left) and in a second position (e.g., shown on the right).

Print material particles container 1000 can include an inner syringe body (e.g., a print material reservoir) including print material particles. The print material reservoir can include sensor 1036 and an output interface 1042. Output interface 1042 can interface with input 1044 of imaging device 1040. Print material particles container 1000 can include plunger 1006 (e.g., a volume adapting structure). The volume adapting structure can include metallic element 1032.

Plunger 1006 (e.g., the volume adapting structure) can be pushed into inner syringe body 1004 (e.g., print material reservoir). As a result, metallic element 1032 can be in proximity with sensor 1036 when plunger 1006 (e.g., the volume adapting structure) is moved from the first position (e.g., illustrated on the left of Figure 10) to the second position (e.g., illustrated on the right of Figure 10) to output print material particles from inner syringe body 1004 to imaging device 1040.

Syringes with plungers according to the disclosure can allow for determination of completion of a fill/refill operation of an imaging device. When the determination that the fill/refill operation is complete, the imaging device can perform print jobs.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure. Further, as used herein, "a" can refer to one such thing or more than one such thing.

The figures herein follow a numbering convention in which the first digit corresponds to the drawing figure number and the remaining digits identify an element or component in the drawing. For example, reference numeral 102 may refer to element 102 in Figure 1 and an analogous element may be identified by reference numeral 202 in Figure 2. Elements shown in the various figures herein can be added, exchanged, and/or eliminated to provide additional examples of the disclosure. In addition, the proportion and the relative scale of the elements provided in the figures are intended to illustrate the examples of the disclosure and should not be taken in a limiting sense.

It can be understood that when an element is referred to as being "on," "connected to", "coupled to", or "coupled with" another element, it can be directly on, connected, or coupled with the other element or intervening elements may be present. In contrast, when an object is "directly coupled to" or "directly coupled with" another element it is understood that are no intervening elements (adhesives, screws, other elements) etc.

The above specification, examples and data provide a description of the method and applications, and use of the system and method of the disclosure. Since many examples can be made without departing from the scope of the system and method of the disclosure, this specification merely sets forth some of the many possible example configurations and implementations. The scope of the invention is defined by the appended claims.

## Claims

1. An apparatus (314), comprising:
an outer syringe body (302) including a normally open switch (316) and a pushrod (310);
**characterised in that** the apparatus further comprises a plunger (306) including a tab (212);
wherein the tab (212) of the plunger (306) is adapted to be in contact with the pushrod (310) when the plunger (306) is moved from a first position into the apparatus (314) to a second position to cause the pushrod (310) to close the normally open switch (316).

2. The apparatus (314) of claim 1, wherein the normally open switch (316) includes a contact lead and an opposite contact lead.

3. The apparatus (314) of claim 2, wherein a gap exists between the contact lead and the opposite contact lead of the normally open switch (316) when the plunger (306) is in the first position.

4. The apparatus (314) of claim 2, wherein the contact lead is adapted to be in contact with the opposite contact lead when the plunger (306) is moved to the second position.

5. The apparatus (314) of claim 1, wherein the tab (212) of the plunger (306) is adapted to be in contact with a protrusion of the pushrod (310) when the plunger (306) is moved from the first position to the second position.

6. The apparatus (314) of claim 3, further comprising an inner syringe body (204) including print material particles;
wherein the plunger (306) is located within the inner syringe body (204);
wherein the plunger (306) is moved from a first position to a second position to cause:
the print material particles to be supplied from the inner syringe body (204) to an imaging device.

7. The apparatus (314) of claim 6, wherein the outer syringe body (302) is connected to the imaging device such that the print material particles is supplied from the inner syringe body (204) to the imaging device when the plunger (306) is moved from the first position to the second position.

## Patentansprüche

1. Einrichtung (314), die umfasst:
einen äußeren Spritzenkörper (302), einschließlich eines normalerweise offenen Schalters (316) und einer Schubstange (310);
**dadurch gekennzeichnet, dass** die Einrichtung ferner einen Kolben (306) einschließlich einer Lasche (212) umfasst;
wobei die Lasche (212) des Kolbens (306) dazu angepasst ist, mit der Schubstange (310) in Kontakt zu sein, wenn der Kolben (306) von einer ersten Position in die Einrichtung (314) in eine zweite Position bewegt wird, um zu bewirken, dass die Schubstange (310) den normalerweise offenen Schalter (316) schließt.

2. Einrichtung (314) nach Anspruch 1, wobei der normalerweise offene Schalter (316) eine Kontaktleitung und eine gegenüberliegende Kontaktleitung einschließt.

3. Einrichtung (314) nach Anspruch 2, wobei eine Lücke zwischen der Kontaktleitung und der gegenüberliegenden Kontaktleitung des normalerweise offenen Schalters (316) besteht, wenn sich der Kolben (306) in der ersten Position befindet.

4. Einrichtung (314) nach Anspruch 2, wobei die Kontaktleitung dazu angepasst ist, mit der gegenüberliegenden Kontaktleitung in Kontakt zu sein, wenn der Kolben (306) in die zweite Position bewegt wird.

5. Einrichtung (314) nach Anspruch 1, wobei die Lasche (212) des Kolbens (306) dazu angepasst ist, mit einem Vorsprung der Schubstange (310) in Kontakt zu sein, wenn der Kolben (306) von der ersten Position in die zweite Position bewegt wird.

6. Einrichtung (314) nach Anspruch 3, die ferner einen inneren Spritzenkörper (204) einschließlich Druckmaterialpartikeln umfasst;
wobei der Kolben (306) innerhalb des inneren Spritzenkörpers (204) gelegen ist;
wobei der Kolben (306) von einer ersten Position in eine zweite Position bewegt wird, um zu bewirken:
dass die Druckmaterialpartikel von dem inneren Spritzenkörper (204) zu einer Bildgebungsvorrichtung zugeführt werden.

7. Einrichtung (314) nach Anspruch 6, wobei der äußere Spritzenkörper (302) mit der Bildgebungsvorrichtung derart verbunden ist, dass die Druckmaterialpartikel von dem inneren Spritzenkörper (204) zu der Bildgebungsvorrichtung zugeführt werden, wenn der Kolben (306) von der ersten Position in die zweite Position bewegt wird.

## Revendications

1. Appareil (314), comprenant :
un corps de seringue externe (302) comportant un interrupteur normalement ouvert (316) et une tige-poussoir (310) ;
**caractérisé en ce que** l'appareil comprend en outre un piston (306) comportant une languette (212) ;
dans lequel la languette (212) du piston (306) est adaptée pour être en contact avec la tige-poussoir (310) lorsque le piston (306) est déplacé d'une première position dans l'appareil (314) à une seconde position pour amener la tige-poussoir (310) à fermer l'interrupteur normalement ouvert (316).

2. Appareil (314) de la revendication 1, dans lequel l'interrupteur normalement ouvert (316) comporte un fil de contact et un fil de contact opposé.

3. Appareil (314) de la revendication 2, dans lequel un espace existe entre le fil de contact et le fil de contact opposé de l'interrupteur normalement ouvert (316) lorsque le piston (306) est dans la première position.

4. Appareil (314) de la revendication 2, dans lequel le fil de contact est adapté pour être en contact avec le fil de contact opposé lorsque le piston (306) est déplacé dans la seconde position.

5. Appareil (314) de la revendication 1, dans lequel la languette (212) du piston (306) est adaptée pour être en contact avec une protubérance de la tige-poussoir (310) lorsque le piston (306) est déplacé de la première position à la seconde position.

6. Appareil (314) de la revendication 3, comprenant en outre un corps de seringue interne (204) comportant des particules de matériau d'impression ;
dans lequel le piston (306) est situé à l'intérieur du corps de la seringue interne (204) ;
dans lequel le piston (306) est déplacé d'une première position à une seconde position pour amener à ce que :
les particules de matériau d'impression soient envoyées du corps de la seringue intérieure (204) à un dispositif d'imagerie.

7. Appareil (314) de la revendication 6, dans lequel le corps de seringue extérieur (302) est relié au dispositif d'imagerie de telle sorte que les particules de matériau d'impression sont fournies par le corps de seringue intérieur (204) au dispositif d'imagerie lorsque le piston (306) est déplacé de la première position à la seconde position.
